# FASCICULE DE BREVET EUROPEEN

(11) **EP 0 685 045 B1**
(45) Date de publication et mention de la délivrance du brevet: **01.04.1998**
(21) Numéro de dépôt: 95904564.2
(22) Date de dépôt: 19.12.1994
(51) Int. Cl.: F16F 15/12

(54) **AMORTISSEUR DE TORSION, NOTAMMENT POUR VEHICULE AUTOMOBILE A LOGEMENT ANNULAIRE ETANCHE**
TORSIONSDÄMFPER, INSBESONDERE FÜR KRAFTFAHRZEUGE MIT RINGFÖRMIGEM ABGEDICHTETEM GEHÄUSE
TORSIONAL DAMPER HAVING A SEALED RING-SHAPED HOUSING, IN PARTICULAR FOR MOTOR VEHICLES

(30) Priorité: 23.12.1993 FR 9315571
(43) Date de publication de la demande: 06.12.1995
(73) Titulaire: VALEO, 75017 Paris (FR)
(72) Inventeur: RÖHRLE, Dieter, F-95160 Montmorency (FR); BONFILIO, Ciriaco, F-92100 Clichy (FR)
(74) Mandataire: Gamonal, Didier
(86) Numéro de dépôt international: FR9401485
(87) Numéro de publication internationale: WO9517617

(56) Documents cités:
- EP-A- 0 529 669
- DE-U- 7 926 142
- GB-A- 2 217 429
- GB-A- 2 219 647
- GB-A- 2 262 587
- PATENT ABSTRACTS OF JAPAN vol. 14, no. 447 (M-1029) 25 Septembre 1990 & JP,A,02 176 225 (AISIN SEIKI CO LTD.) 9 Juillet 1990

## Description

La présente invention concerne un amortisseur de torsion, notamment pour véhicule automobile, tel que décrit et représenté par exemple dans le document DE-U-79 26 142 refletant l'état de la technique défini par le préambule de la revendication 1.

Cet amortisseur comporte un premier et un second éléments tournants qui définissent entre eux un logement annulaire, qui reçoit un dispositif élastique d'amortissement agissant circonférentiellement entre les deux éléments tournants.

Il est souhaitable de lubrifier les différents composants du dispositif élastique d'amortissement et notamment les ressorts, que comporte un tel dispositif, avec leurs zones de portée associées ménagées dans les éléments tournants.

Pour cette raison, il a été proposé dans les susmentionnés documents de délimiter de manière étanche ledit logement annulaire pour qu'il contienne un agent de lubrification, tel que de la graisse, qui ne puisse pas pénétrer radialement vers l'intérieur entre les deux éléments tournants.

Afin d'assurer l'étanchéité du logement, radialement vers l'intérieur, il a été proposé dans le document DE-U-79 26 142, des moyens d'étanchéité qui comportent deux rondelles d'étanchéité axiales, dont chacune est en appui par l'une de ses faces, contre une première surface de portée associée au premier élément tournant et par l'autre de ses faces contre une seconde surface de portée associée au second élément tournant, chaque rondelle d'étanchéité étant montée comprimée axialement, de manière à présenter une forme de tronc de cône.

Dans le mode de réalisation proposé dans ce document, chacune des surfaces de portée est constituée par un joint torique annulaire agencé dans une gorge annulaire formée à cet effet dans une portion de surface en vis-à-vis de l'un et de l'autre des deux éléments tournants et chaque rondelle d'étanchéité est maintenue radialement par simple contact de friction de ses faces opposées avec les deux joints toriques correspondants.

Plus précisément dans ce document le logement annulaire est délimité en majeure partie par au moins deux pièces appartenant à un premier des éléments tournants, le second élément tournant comportant un disque qui pénètre dans ledit logement.

Ainsi l'une des surfaces de portée est formée à la faveur du disque, lesdites rondelles d'étanchéité étant disposées de part et d'autre dudit disque.

L'agencement des moyens d'étanchéité proposé dans ce document est particulièrement complexe et coûteux en ce qu'il fait appel à des composants nombreux, en ce qu'il nécessite de prévoir l'usinage de gorge de dimension précise pour les joints toriques d'étanchéité, et en ce que l'assemblage des différents composants afin d'assurer le positionnement correct des rondelles d'étanchéité entre leur joint correspondant est particulièrement difficile à réaliser et à automatiser.

En outre ses rondelles peuvent se retourner, tout cela dépendant des tolérances de fabrication notamment des joints toriques.

De plus, le disque précité de l'élément tournant concerné doit avoir une épaisseur non négligeable afin de pouvoir réaliser les gorges. En effet, le couple est transmis par l'intermédiaire de ce disque qui en conséquence doit avoir une épaisseur déterminée pour transmettre ledit couple. Il faut donc tenir compte des gorges pour déterminer cette épaisseur.

La présente invention a pour but de proposer un amortisseur de torsion du type susmentionné, dont la structure des moyens d'étanchéité du logement annulaire soit particulièrement simple et permette de remédier aux inconvénients, qui viennent d'être mentionnés.

Dans ce but, l'invention propose un amortisseur de torsion du type sus-indiqué, caractérisé en ce que chaque rondelle est montée comprimée axialement directement entre ses deux surfaces de portée, et est susceptible de prendre appui radialement par l'un de ses bords circulaires sur une nervure annulaire de portée formée en vis-à-vis sur l'un des éléments premier élément tournant - disque du second élément tournant et par l'autre de ses bords circulaires contre un épaulement formé en vis-à-vis sur l'autre des éléments premier élément tournant - disque du second élément tournant, et en ce que lesdites rondelles sont sensiblement parallèles.

Ainsi le montage de la rondelle est simplifié puisque celle-ci prenne appui contre ledit épaulement. En outre, il n'y a pas besoin de faire appel à des joints toriques d'étanchéité, ni de prévoir l'usinage de gorges. En effet, l'étanchéité est réalisée grâce aux épaulements et aux nervures annulaires de portée selon l'invention. En outre, le disque n'est pas affaibli, outre mesure.

De plus les épaulements et/ou les nervures pratiquées dans ce disque sont aisément réalisables.

Ce disque peut donc avoir l'épaisseur minimale au bénéfice d'une réduction de l'encombrement axial de l'amortisseur. En outre la réalisation des épaulements et/ou des nervures dans le premier élément tournant est aisée à réaliser. De plus les risques de retournement des rondelles d'étanchéité sont minimisés car leur appui est réalisé directement.

On notera que le parallélisme des rondelles permet de reduire l'encombrement axial.

Avantageusement chaque épaulement radial comporte une surface de butée globalement cylindrique et une surface de portée qui s'étend globalement radialement et qui les délimitent entre elles un fond d'épaulement contre lequel la rondelle associée est susceptible de prendre appui, de manière étanche, par l'un de ses bords circulaires.

Ainsi la surface de butée cylindrique facilite le montage des rondelles d'étanchéité.

Chaque épaulement comporte, selon une caractéristique, une surface de portée conique qui, en section transversale, forme un angle obtu avec la surface de butée cylindrique. En variante l'angle peut être aigu.

Ainsi il est possible de donner aisément une forme en tronc de cône aux rondelles d'étanchéité après leur montage, lesdites portées coniques permettant cela.

Selon une autre caractéristique, le sommet de la nervure de portée est décalée axialement par rapport au fond de l'épaulement associé. Cette disposition permet également de donner une forme tronconique aux rondelles d'étanchéité.

Dans une réalisation les deux nervures annulaires sont réalisées sur le disque du second élément tournant.

Dans une autre variante de réalisation, le disque présente une nervure et un épaulement. Enfin dans une troisième variante de réalisation, les deux épaulements sont réalisés sur le disque.

Cette disposition permet de réaliser les deux rondelles d'étanchéité à partir d'une seule plaque. L'une des rondelles, dite rondelle interne, étant obtenue à partir de la chute de matière de l'autre rondelle dite rondelle externe. Dans tous les cas le disque est incliné au niveau des rondelles d'étanchéité.

D'autres caractéristiques et avantages de l'invention apparaîtront à la lecture de la description et en regard des dessins annexés dans lesquels :
- la figure 1 est une vue en coupe selon la ligne 1-1 de la figure 2 d'un amortisseur de torsion sous forme d'un volant amortisseur selon l'invention ;
- la figure 2 est une vue partielle de droite, avec arrachement partiel, du volant amortisseur de la figure 1 ;
- la figure 3 est une vue à plus grande échelle de la partie supérieure du volant amortisseur de la figure 1 ;
- la figure 4 est une demi-vue analogue à la figure 1 illustrant un second mode de réalisation d'un amortisseur de torsion selon l'invention ;
- la figure 5 est une vue analogue à la figure 1 pour un troisième exemple de réalisation et selon la ligne 5-5 de la figure 6 ;
- la figure 6 est une vue partiellement coupée selon la ligne 6-6 de la figure 5 ;
- la figure 7 est une demi-vue analogue à la figure 1 pour un quatrième exemple de réalisation.

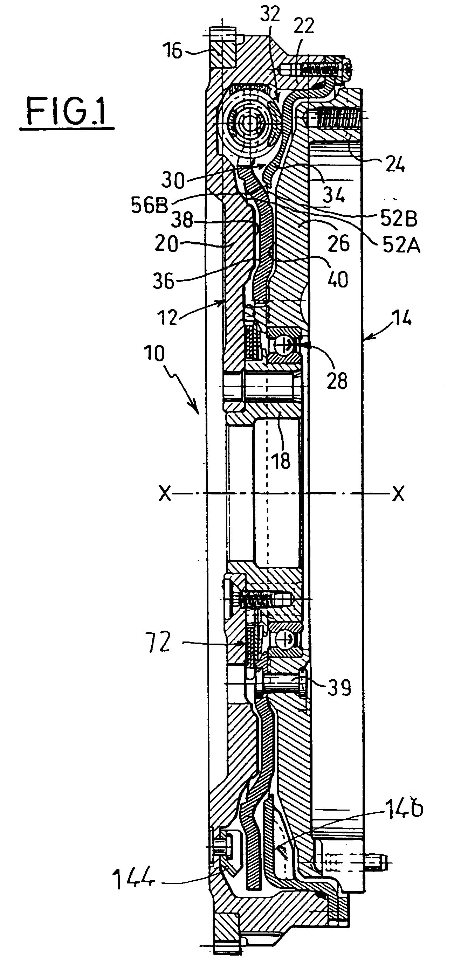

Dans les figures 1 à 3, on a représenté un amortisseur de torsion sous forme d'un volant amortisseur 10 pour véhicule automobile, qui est pour l'essentiel, constitué par un premier élément tournant 12 et un second élément tournant 14, qui sont susceptibles de tourner l'un par rapport à l'autre autour d'un axe X-X à l'encontre d'un dispositif élastique d'amortissement 32 à action circonférentielle, agissant entre lesdits éléments tournants.

Ce dispositif élastique d'amortissement 32 est monté dans un logement annulaire 30 défini par les deux éléments tournants. Ici le logement annulaire 30 est délimité en majeure partie par le premier élément tournant 12 et le second élément tournant 14 comporte un disque 36, qui pénètre dans ledit logement 30 étanche de manière décrite ci-après.

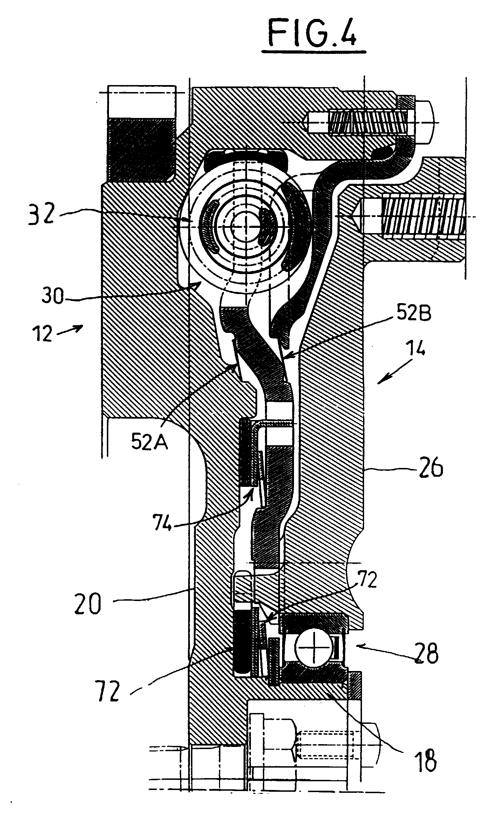

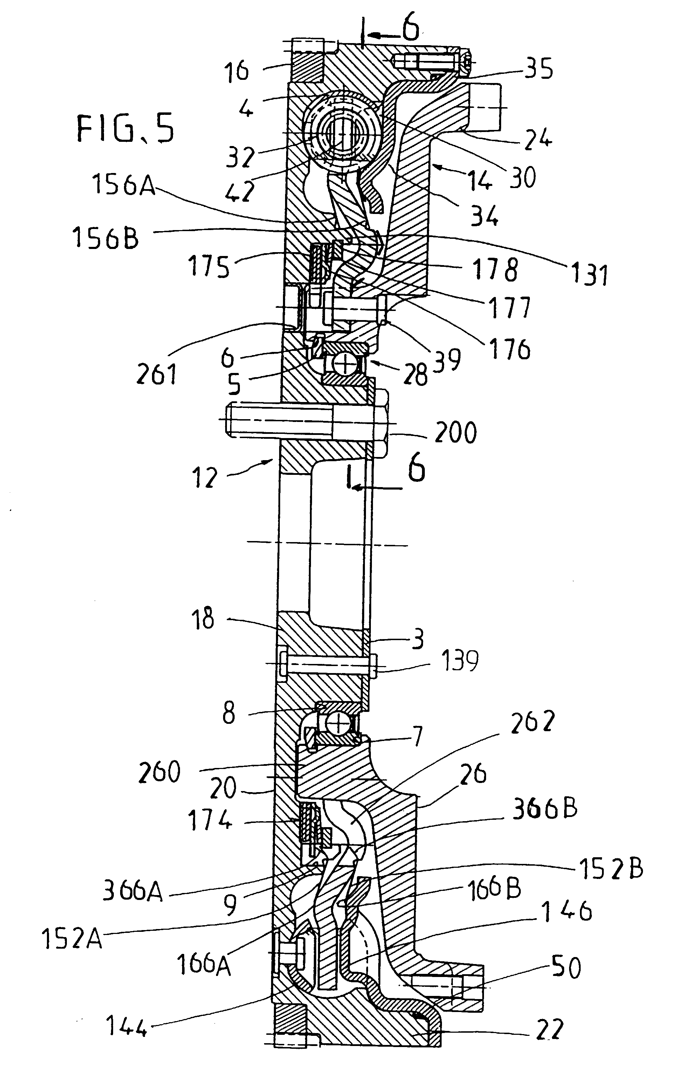

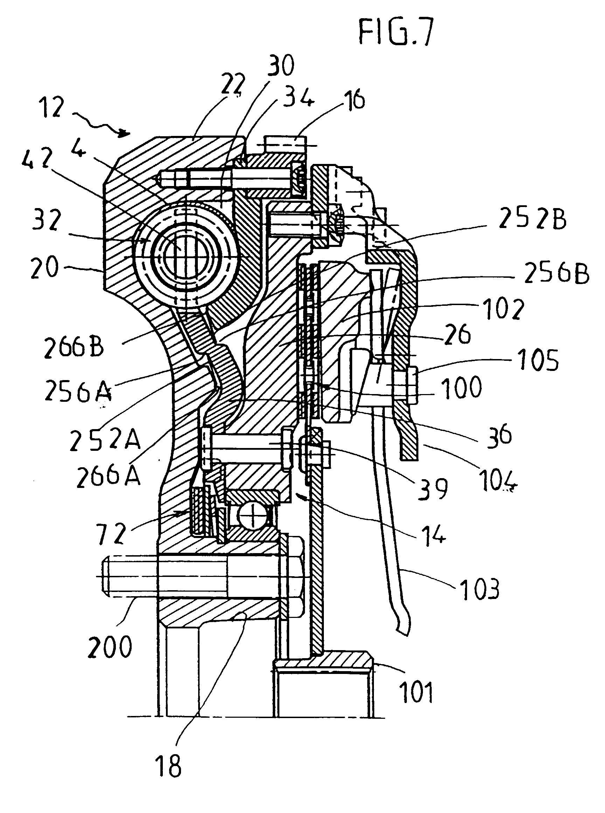

Dans ces figures, le premier élément 12, en forme générale de plateau, porte une couronne extérieure dentée 16 prévue pour coopérer avec le démarreur du véhicule (non représenté) et un moyeu central 18 prévu pour être fixé sur l'extrémité du vilebrequin (non représenté) du moteur à combustion interne du véhicule, usuellement par des vis visibles par exemple à la figure 4, ainsi que dans les figures 5 et 7 où elles portent la référence 200.

Le premier élément tournant 12 est constitué pour l'essentiel par un plateau 20 et par une jupe annulaire périphérique cylindrique 22, d'orientation axiale, qui entoure partiellement une jupe annulaire périphérique cylindrique 24, qui prolonge axialement la partie principale en forme de plateau 26 du second élément tournant 14, qui est montée à rotation sur le moyeu 18 par l'intermédiaire d'un palier 28, ici sous forme d'un roulement.

Ici les jupes 22 et 24 sont d'un seul tenant avec leurs plateaux associés 20,26.

Ici le plateau 26 forme le plateau de réaction d'un embrayage comme décrit dans le document GB-A-2 219 647.

Pour mémoire on rappellera que l'embrayage comporte également un disque de friction, doté de garnitures de frottement, et un plateau de pression soumis usuellement à l'action d'un diaphragme prenant appui sur un couvercle fixé sur l'extrémité libre de la jupe 24 de la masse 14.

Le disque de friction est accouplé à un moyeu, calé en rotation sur l'arbre d'entrée de la boîte de vitesses. Lorsque l'embrayage est engagé, les garnitures de frottement du disque de friction sont serrées entre les plateaux de pression et de réaction de l'embrayage, en sorte que le couple est transmis du moteur à l'arbre d'entrée de la boîte de vitesses.

Pour désengager (débrayer) l'embrayage, on agit sur le diaphragme en tirant ou en poussant sur l'extrémité des doigts dudit diaphragme afin de desserrer les garnitures de frottement du disque de friction comme mentionné dans le susmentionné document. Pour plus de précision, on se reportera à la figure 7 dans laquelle le disque de friction porte la référence 100, le moyeu la référence 101, le plateau de pression la référence 102, le diaphragme la référence 103 et le couvercle la référence 104.

Dans cette figure, on agit en poussant, à l'aide d'une butée de débrayage (non représentée), sur l'extrémité des doigts du diaphragme 100, pour débrayer l'embrayage. Le diaphragme 103 est dans cette figure monté de manière pivotante sur le couvercle 104 ici par l'intermédiaire de colonnettes 105.

Ainsi le volant amortisseur, dit communément double volant amortisseur, comporte deux masses coaxiales, à savoir le premier élément tournant 12 et le second élément tournant 14, montées rotatives l'une par rapport à l'autre, la première masse 12 étant calée en rotation sur le moteur à combustion interne du véhicule, tandis que la seconde masse 14 est destinée à être calée en rotation, par l'intermédiaire de l'embrayage, sur l'arbre d'entrée de la boîte de vitesses.

Les masses 12,14 sont montées rotatives l'une par rapport à l'autre à l'encontre du dispositif d'amortissement 32 précité et d'au moins un dispositif complémentaire de frottement 72 agissant axialement entre les deux masses.

Le logement annulaire externe 30 est prévu pour recevoir le dispositif élastique d'amortissement 32, constitué ici par un ensemble de ressorts hélicoïdaux concentriques, à action circonférentielle, agencés en secteurs annulaires. Ces ressorts s'étendent ici globalement sur 180°.

Le premier élément tournant 12 comporte également un disque radial interne 34, qui s'étend radialement depuis la jupe 22 en direction de l'axe X-X de l'ensemble.

Ainsi le logement 30 est délimité en majeure partie par des pièces 20,22,34 appartenant ici au premier élément tournant 12.

Pour ce faire, le disque 34, ici métallique, est lié en rotation à la jupe extérieure 22. Ce disque 34 a une forme tortueuse et est prolongé à sa périphérie externe par un rebord annulaire, d'orientation axiale, en contact avec la périphérie interne de la jupe 22, et par un rebord radial 35 prolongeant ledit rebord axial.

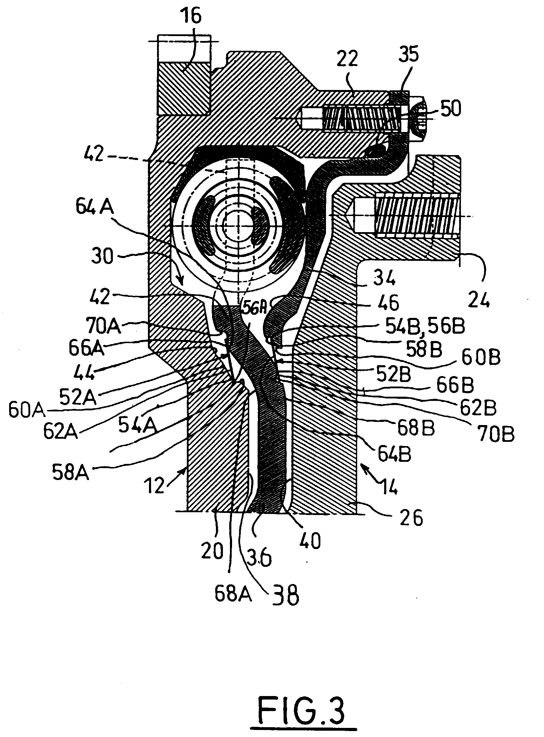

Ce rebord radial 35 est en contact avec l'extrémité libre de la jupe 22. Il est troué localement pour passage de vis de fixation à la jupe 22, tel que visible notamment dans les figures 1 et 3. Ce rebord 35 constitue donc un rebord de fixation.

Le second élément tournant 14 comporte également un disque 36, s'étendant radialement vers l'extérieur, qui lui est lié en rotation par des rivets 39, à la faveur d'une zone de fixation d'orientation radiale, et qui s'étend radialement dans le logement 30 formé à la périphérie externe du volant amortisseur et dans l'espace annulaire central délimité entre des portions de surface plane en vis-à-vis 38 et 40 des plateaux 20 et 26.

Le logement 30 est donc délimité également en partie par le disque 36 et forme une cavité remplie ici partiellement de graisse pour lubrifier les ressorts du dispositif élastique 32 et augmenter ainsi la durée de vie de l'amortisseur, tout en améliorant son fonctionnement. Le disque 36 est ici métallique en étant obtenu par découpe et emboutissage.

Le bord extérieur du disque 36 comporte, à l'intérieur du logement étanche 30, des pattes radiales externes 42 prévues pour servir de butée et d'appui aux extrémités circonférentielles des ressorts à boudin concentriques dudit dispositif élastique 32.

Les pattes 42 du disque 36 s'étendent entre des butées en vis-à-vis 144 du plateau 20 et des butées en vis-à-vis 146 du disque 34 de l'élément tournant 12.

Les butées 144,146 servent d'appui aux extrémités circonférentielles des ressorts du dispositif 32. Ces butées sont formées respectivement à la faveur de pièces métalliques 144 fixées par rivetage étanche au plateau 20 et par des emboutissages locaux 146 du disque 34 et c'est pour cette raison que dans la partie basse de la figure 1, on a éliminé lesdits ressorts pour mieux montrer ces butées.

Ainsi le plateau 20 et le disque 34 forment des rondelles de guidage pour les ressorts du dispositif 32 et le disque 36 un voile pénétrant entre le plateau 20 et le disque 34.

Ainsi qu'on le sait, lors d'un mouvement relatif entre les deux masses 12 et 14, les bras 42 agissent sur les ressorts du dispositif 32, dont les extrémités circonférentielles sont en appui sur les butées 144,146, ici par l'intermédiaire de coupelles d'appui 135 en matière plastique, en sorte que lesdits ressorts concentriques sont comprimés.

Le ressort 132 le plus interne a un pas inverse des deux autres ressorts du dispositif 32 en étant plus court que ceux-ci. Ce ressort 132 est emmanché sur l'une des coupelles 135 et intervient en fin du mouvement relatif entre les deux masses 12,14 pour éviter les chocs.

Il est ainsi porté par l'une des coupelles d'appui 135 et est admis à coopérer avec l'autre coupelle d'appui 135 pour être comprimé entre les deux coupelles d'appui 135, associée chacune à l'une des extrémités circonférentielles des ressorts externes du dispositif 32, et ce à la fin dudit mouvement relatif.

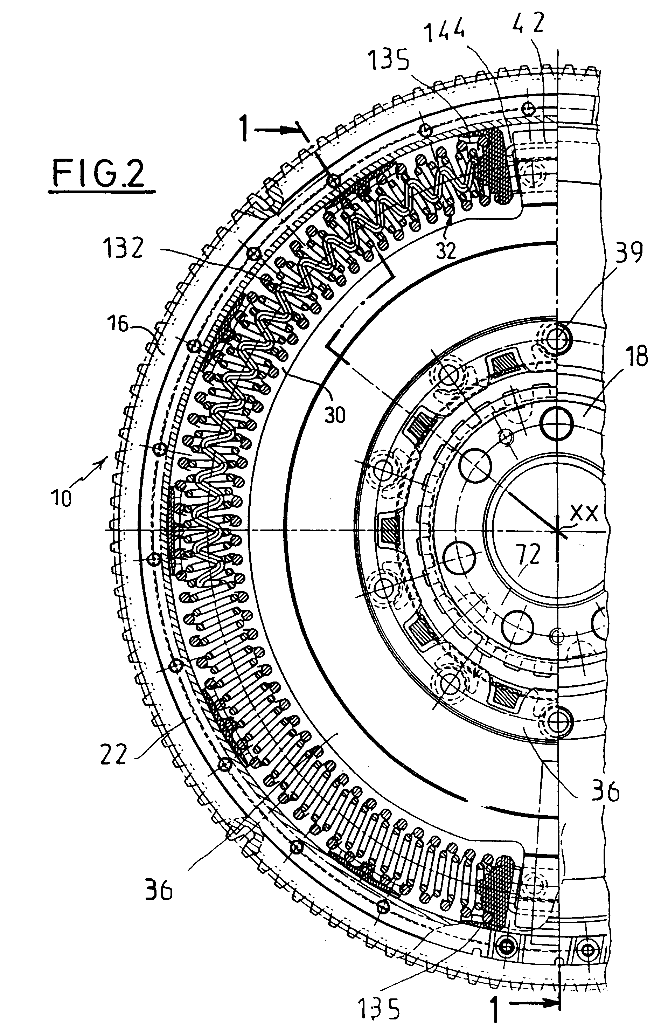

Ici les ressorts externes du dispositif 32 portent des patins (figure 2) destinés à venir en contact avec la périphérie interne de la jupe 22 pour éviter une usure desdits ressorts, dont les extrémités circonférentielles s'appuient sur les butées 144,146 et les pattes 42 par l'intermédiaire de coupelles d'appui (figure 2). Le logement 30 supporte donc radialement les ressorts à boudin du dispositif 32.

On notera que le plateau 20 est creusé au niveau du dispositif 32 pour loger les ressorts de celui-ci.

Avantageusement les plateaux 20 et 26 avec leurs jupes 22 et 24 sont obtenus par moulage. Le plateau 26 étant usuellement en fonte.

L'étanchéité du logement annulaire 30, qui est ouvert vers l'intérieur, est assurée au moyen d'un joint torique d'étanchéité 50 interposé entre la périphérie interne de la jupe 22 et le rebord de fixation 35 du disque 34, et, conformément à l'invention par deux rondelles 52A et 52B disposées de part et d'autre du disque 36 du second élément 14.

Dans les figures 1 à 3, les deux rondelles 52A et 52B sont deux pièces identiques qui dans leur position naturelle, avant leur montage dans le volant amortisseur dans la position illustrée sur la figure 3, sont des rondelles annulaires plates en métal. Ces rondelles 52A,52B, métalliques, sont relativement minces et présentent donc ainsi une certaine souplesse.

En position montée, chacune rondelle 52A est comprimée axialement directement entre une surface de portée appartenant au premier élément tournant 12 et une seconde surface de portée appartenant au disque 36 du second élément tournant 14.

Ces surfaces de portée sont continues en étant formées directement sur deux pièces du premier élément tournant 12 et sur le disque 36 du second élément 14.

Plus particulièrement dans les figures 1 à 3 le bord circulaire intérieur 54A de la première rondelle 52A est en appui radial contre le fond 56A d'un épaulement formé dans une portion de surface 44 du plateau 20 du premier élément 12, qui est délimitée par une surface de butée cylindrique 58A, d'orientation axiale, et par une surface de portée conique 60A, qui s'étend globalement radialement en direction opposée à l'axe de l'ensemble à partir de la surface 58A. En variante la surface de portée 60A peut s'étendre radialement.

Une première face 62A de la rondelle 52A est ainsi susceptible de coopérer de manière étanche avec la surface de portée conique 60A, tandis que la seconde surface opposée 64A de la rondelle 52A coopère avec une surface de portée 66A constituée par le sommet d'une nervure formée sur la portion de surface 68A en vis-à-vis du premier élément tournant 12.

Le fond 56A et la nervure 66A sont circulairement continus en étant décalés axialement l'une par rapport à l'autre, la nervure 66A étant plus éloignée axialement du plateau 26 que le fond 56A.

A proximité de la nervure 66A, le disque 36 comporte un dégagement 70A pour éviter tout blocage de la rondelle 52A entre ses appuis 66A,56A.

De manière symétrique, le bord circulaire extérieur 54B de la seconde rondelle d'étanchéité 52B est en appui radial dans le fond 56B d'un épaulement formé dans une portion de surface 46 du disque 34 de l'élément 12.

Le fond 56B s'étend à la périphérie interne du disque 34. L'épaulement 56B du disque 34 est délimité par une surface de portée cylindrique 56B d'orientation axiale et par une surface de portée conique 60B s'étendant ici radialement en direction de l'axe de l'ensemble.

La rondelle 52B est susceptible de coopérer avec cette portée 60B par la portion en vis-à-vis de sa première face 62B.

Sa seconde face 64B coopère quant à elle avec une surface de portée continue constituée par le sommet d'une nervure annulaire 66B formée dans la portion de surface 68B du disque 36, qui se prolonge radialement vers l'intérieur par un dégagement 70B identique au dégagement 70A. La nervure 66B est décalée axialement par rapport à l'épaulement 56B. Cette nervure est plus proche du plateau 26.

La nervure 66B s'étend radialement en-dessous de la nervure 66A, tandis que le fond 56A du plateau 20 est disposé radialement en-dessous du fond 56B du disque 34.

Les deux rondelles d'étanchéité métalliques 52A et 52B présentent ainsi après montage des profils parallèles en tronc de cône et elles sont en appui élastique opposé pour coopérer de manière étanche avec les pièces correspondantes des premier et second éléments tournants 12 et 14.

La position radiale correcte des rondelles 52A et 52B est assurée par la présence de l'épaulement radial 56A,56B coopérant avec le bord circulaire 54A et 54B respectivement des rondelles 52A et 52B.

Ces épaulements radiaux 56A et 56B centrent donc les rondelles 52A,52B, dont le montage est aisé grâce aux surfaces de butée cylindriques 58A et 58B.

On notera que les portées cylindriques de centrage 58A,58B forment un angle obtu avec leur surface de portée conique 60A,60B.

En position de précontrainte axiale, comme cela est illustré sur la figure 3, le maintien en position correcte et la coopération étanche est aussi assurée par le fait que le sommet de chacune des nervures de portée 66A,66B est décalé axialement par rapport au fond 56A,56B de l'épaulement radial (figures 3 et 4).

Bien entendu ce décalage est choisi tel que les rondelles d'étanchéité ne se retournent pas.

On appréciera que les surfaces de portée coniques 60A,60B, ainsi que les dégagements 70A et 70B permettent aux rondelles d'étanchéité 52A,52B d'avoir la forme tronconique voulue.

Dans le mode de réalisation de la figure 1, un dispositif d'amortissement à friction 72 est monté sur le moyeu central 18, en étant interposé axialement entre le plateau 20 et la bague interne du roulement à billes 28.

Ce dispositif comporte, en succession axiale, en allant du plateau 20 au roulement 28, une rondelle de frottement montée libre sur le moyeu 18, une rondelle d'application calée en rotation sur le moyeu 18, par exemple par un méplat ou un système de dentures, une rondelle élastique à action axiale, ici du type rondelle Belleville, prenant appui sur la rondelle d'application et une rondelle de butée calée axialement entre la bague interne du roulement 28 et un épaulement du moyeu 18.

Le plateau 26 comporte des dents ou tenons d'orientation axiale pénétrant à jeu dans des échancrures, que présente la rondelle de frottement à sa périphérie externe. Il y a ainsi création d'une liaison du type tenons-mortaises à jeu.

Lors du débattement angulaire relatif entre le plateau 26 et le plateau 20, la rondelle de frottement, tarée élastiquement, par la rondelle élastique du type rondelle Belleville, est admise à frotter contre le plateau 20 et la rondelle d'application après rattrapage du jeu entre les tenons et les mortaises.

Grâce à l'invention, de la place existe radialement entre les rondelles d'étanchéité 52A,52B et le dispositif de frottement 72, en sorte qu'il est possible de monter un autre dispositif de frottement 74 radialement entre le logement annulaire 30 et le premier dispositif de frottement 72 (figure 4).

Ce dispositif de frottement 74 intervient axialement entre le disque 36 et le plateau 20. Il comporte ici une rondelle de frottement collée sur une rondelle d'application métallique dotée de pattes axiales pénétrant de manière complémentaire dans des ouvertures prévues dans le disque 36.

Une rondelle élastique, du type rondelle belleville, est interposée axialement entre la rondelle d'application et le disque 36.

Ainsi la rondelle de frottement, lors du mouvement relatif entre les plateaux 20 et 26 est admise à frotter contre le plateau 20 et ce dès le début dudit mouvement relatif.

On notera que dans les figures 3 et 4, que le disque 36 est incliné axialement entre ses nervures 66A,66B et que le plateau 26 a une épaisseur réduite au niveau de sa jupe 24 en regard du disque 34 dont la périphérie interne est inclinée axialement en direction du disque 36.

Toutes ces dispositions, en combinaison avec la creusure pratiquée dans le plateau 20, pour montage du dispositif 32, permettent de réduire l'encombrement axial du volant amortisseur.

On appréciera que l'inclinaison du disque 36, entre ses nervures 66A et 66B, facilite le montage et la mise en cône des rondelles 52A,52B, qui sont sensiblement parallèles entre elles après montage.

A l'arrêt du véhicule, la graisse contenue dans le logement 30 ne peut s'échapper grâce aux rondelles 52A,52B, il en est de même lorsque le véhicule roule.

Ainsi la graisse ne peut s'échapper du logement 30 et venir polluer les dispositifs de frottement 72,74 ainsi qu'éventuellement le plateau de réaction 26.

Bien entendu, la présente invention n'est pas limitée aux exemples de réalisation décrits.

En particulier, la jupe 22 peut être rapportée par exemple par rivetage ou soudage sur le plateau 20, en sorte que le logement 30 est délimité par trois pièces appartenant à l'élément tournant 12.

De préférence, la jupe 22 est alors rapportée par des colonnettes sur le plateau 20, qui permettent également la fixation du disque 34.

Ce disque 34 peut être soudé sur la jupe 22, en sorte que la présence du joint 50 n'est plus nécessaire.

Le moyeu 18 peut être d'un seul tenant avec le plateau 20 (comme à la figure 4) ou être rapporté par vissage sur le plateau (comme à la figure 1) Ce moyeu 18 est donc solidaire du plateau 20. L'amortisseur de torsion peut être du type de celui décrit dans le document DE-U-79 26 142. Dans ce cas, le disque 36 est solidaire d'un moyeu solidaire en rotation sur l'arbre d'entrée de la boîte de vitesses, tandis que le disque 34 est prolongé vers l'intérieur jusqu'au voisinage du moyeu.

Une seule rangée de ressorts est alors prévue. Bien entendu le disque 36 peut présenter dans le logement 30 des fenêtres au lieu de pattes 42 pour montage des ressorts du dispositif élastique 32.

L'appui des ressorts sur les pièces 20 et 24 peut se faire par l'intermédiaire de blocs rapportés sur le plateau 20 et le disque 34.

Dans le cas d'une disposition du type de celle du document DE-U-79 26 142, l'ensemble 12 peut être rapporté par exemple sur un plateau solidaire du vilebrequin du moteur du véhicule, par exemple par vissage. Dans ce type de construction, le second ensemble 14 ne comporte pas de plateau de réaction.

En variante l'ensemble 12 peut porter le disque de friction de l'embrayage. Dans tous les cas, le disque 36 pénètre dans le logement 30.

Bien entendu le logement annulaire étanche 30 peut être rempli d'un fluide visqueux ou de tout autre agent lubrifiant pour les ressorts du dispositif élastique 32.

Le plateau 20 et le disque 34 (figures 5 et 7) peuvent être conformés pour épouser la forme des ressorts du dispositif élastique 32 comme dans le document GB-A-2 219 647. Dans tous les cas, les ressorts du dispositif élastique 32 interviennent circonférentiellement entre le premier élément tournant (12) et le disque du second élément tournant (14).

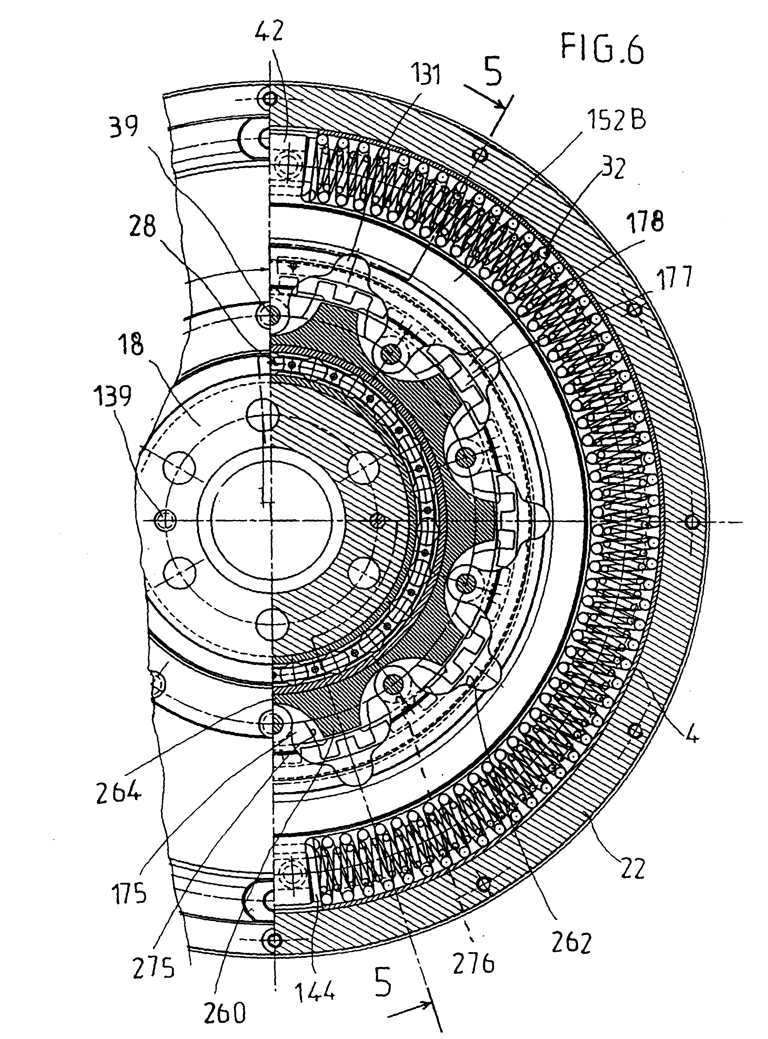

A la figure 5 les ressorts à boudin externe du dispositif 32 peuvent venir en contact avec chacun une pièce 4 (figure 6) antiusure en forme de goulotte interposée radialement entre ledit ressort et la périphérie interne, en forme de tore, de la jupe 22. Dans cette figure les ressorts concentriques du dispositif 32 s'appuient directement sur les butées 144 et 146 et le ressort interne 132 est supprimé. Le logement 30 est fermé intérieurement par deux rondelles d'étanchéité 152A,152B sensiblement identiques. Ces rondelles sont plates à leur état naturel et sont mise sous précontrainte après montage comme les rondelles 52A,52B et ce de manière décrite ci-après.

En outre la bague interne du roulement 28 est calée axialement, d'une part, à l'avant par un épaulement 8 ménagé à la périphérie externe du moyeu 18 d'un seul tenant avec le plateau 20 de la première masse 12, et d'autre part, à l'arrière par une rondelle 3 fixée par des rivets 139 sur l'extrémité libre du moyeu 18. Cette rondelle 3 sert d'appui aux têtes des vis 200 de fixation de la première masse 12 sur le vilebrequin du moteur du véhicule.

La bague externe du roulement 28 est calée axialement, d'une part, à l'arrière par un épaulement 7 ménagé à la périphérie interne du plateau de réaction 26 de la seconde masse et, d'autre part, à l'avant par un anneau fendu 5, dont la périphérie externe forme un coin avec une face avant dotée d'une portée conique pour coopération avec une portée conique complémentaire, que présente une gorge 6 dans laquelle est monté l'anneau 5.

Cette gorge 6 est pratiquée dans un manchon d'orientation axiale 264, que présente d'un seul tenant le plateau de réaction 26 à sa périphérie interne en direction du plateau 20.

La face arrière de l'anneau 5 est plane pour coopération avec la tranche concernée de la bague externe du roulement 28.

Cette disposition rend plus robuste le plateau de réaction 26. En effet, on peut également monter la rondelle 5 à l'arrière de la bague externe du roulement 28, mais dans ce cas des amorces de rupture peuvent se produire. En montant l'anneau à l'avant on diminue ces risques. De plus cela permet de diminuer l'épaisseur du plateau de réaction 26 comme mieux visible à la figure 5 au bénéfice d'une réduction de l'encombrement axial.

Il faut alors monter le dispositif de frottement référencé ici en 174, radialement au-dessus de l'anneau 5 et de la gorge 6 et donc du manchon 264. Ce dispositif 174 à action axiale comporte, comme à la figure 1, successivement axialement en allant du plateau 20 au plateau 26, une rondelle de frottement 175, une rondelle de répartition 176, une rondelle élastique à action axiale 177, un circlips 178.

La rondelle 177, ici du type rondelle Belleville, prend appui sur le circlips 178 pour action sur la rondelle 176 et serrage de la rondelle 175 entre le plateau 20 et ladite rondelle 176.

Pour ce faire, le plateau 20 présente, radialement au-dessus des rivets 39 de fixation du disque 36 au plateau 26, un retour d'orientation axiale 131 dirigé vers le disque 36. Ce retour 131 présente intérieurement une gorge pour montage du circlips 178. L'alésage interne de ce retour 131 présente des rainures 9 à fond fermé par le plateau 20. La rondelle 176, ici métallique, présente à sa périphérie externe des tenons sous forme de pattes radiales pour engagement de manière complémentaire dans les rainures 9.

La rondelle 176 est donc liée en rotation, avec mobilité axiale, au plateau 20 et ce par coopération de formes du type tenons-mortaises.

Ici deux rainures 9 sont prévues. Ces rainures 9 sont globalement diamétralement opposées. Bien entendu cela dépend des applications.

On notera que la rondelle Belleville 177 présente intérieurement des doigts radiaux dirigés vers le centre pénétrant entre deux bossages consécutifs, que présente par emboutissage la rondelle 176 à sa périphérie interne.

La rondelle 177 est donc bloquée en rotation par coopération de formes de ses doigts avec les bossages de la rondelle 176, usuellement nommée rondelle d'application.

La rondelle 175 présente à sa périphérie interne des échancrures 275,276 (figure 6) respectivement pour passage des tenons d'orientation axiale 260, que présente le plateau de réaction 26 entre deux rivets 39 consécutifs et pour accès à la tête des rivets 39.

La rondelle 175 est décalée axialement par rapport à la tête des rivets 39 et grâce aux échancrures 276, ouvertes radialement vers l'extérieur, on peut faire passer l'outil de sertissage à travers les ouvertures 261 prévues dans le plateau 20 à cet effet pour procéder à la fixation du disque 36 au plateau 26 par rivetage.

Ensuite on bouche les trous 261 à l'aide de caches. Les échancrures 275, ouvertes radialement vers l'intérieur, constituent des mortaises traversées à jeu circonférentiel par les tenons 260.

On appréciera que ces tenons sont aisément réalisables par fraisage et c'est la raison pour laquelle ils ont des bords latéraux de forme circulaire. Les tenons 260 font saillie radialement par rapport aux rivets 39.

Les bords des échancrures 275 de la rondelle 175 sont bombés. Ainsi la rondelle 175 avantageusement en matière synthétique engrène à jeu avec les tenons 260 du plateau 26 et fait sentir ses effets de manière différée (après rattrapage des jeux). Les bords latéraux des tenons 260 et des échancrures 275 ont une forme complémentaire. Ainsi le dispositif de frottement 174, implanté axialement entre le plateau 36, n'agit pas sur ledit disque.

On notera que les tenons 260 sont reliés ensemble à leur périphérie interne par le manchon 264. Ces tenons 260 rigidifient donc le manchon 264 dirigé vers le plateau 20. on obtient donc une solution très robuste avec un manchon 264 dirigé axialement en sens inverse par rapport au retour 131.

A sa périphérie externe le retour 131 présente un bourrelet 156A formant un des épaulements selon l'invention. Dans cette réalisation le disque 36 présente à sa périphérie externe sur sa face tournée vers le plateau 20 une nervure 166A et radialement plus à l'intérieur sur sa face tournée vers le plateau 26 un épaulement 156B. le disque 34 présente une nervure 166B globalement sur la même circonférence que la nervure 166A, les épaulements 156A et 156B étant implantés globalement sur la même circonférence.

Ainsi la rondelle d'étanchéité 152A est montée comprimée axialement directement entre ses deux surfaces de portée et prend appui par son bord intérieur contre l'épaulement 156A formé en vis-à-vis sur le premier élément tournant 12 et par son bord extérieur sur la nervure annulaire 166A formée en vis-à-vis sur le disque 36 du second élément tournant 14. De même la rondelle d'étanchéité 152B prend appui par son bord circulaire extérieur sur la nervure annulaire 166B formée en vis-à-vis sur le disque 34 appartenant au premier élément tournant 34 et par son bord circulaire intérieur prend appui sur l'épaulement 156B formé en vis-à-vis sur le disque 36 du second élément tournant 14.

Les nervures 166A,166B sont décalées axialement par rapport aux épaulements 156A,156B et ce en direction du plateau 20 de la première masse 12.

Chaque épaulement 156A,156B forme le sommet d'une surface de portée conique qui s'étend radialement en direction opposée à l'axe de l'ensemble, cette portée conique se raccordant à une surface de butée cylindrique d'orientation axiale. Les surfaces de portée coniques sont inclinées toutes deux en direction du plateau de réaction 26. Elles forment un angle aigu avec leur surface de butée cylindrique associée.

Ainsi les rondelles d'étanchéité 152A,152B métalliques comme à la figure 1 sont centrées par les surfaces de butée cylindriques et ici le disque 36 présente à sa périphérie interne des échancrures 262 interrompant ladite surface de butée cylindrique et donc ledit épaulement 156B.

De même les rainures 9 interrompent l'épaulement 156A, ainsi que sa surface de butée cylindrique.

On profite de ces interruptions pour doter les rondelles d'étanchéité 152A,152B de pattes inclinées respectivement 366A et 366B pénétrant respectivement dans les rainures 9 et les échancrures 262 ouvertes radialement vers l'intérieur.

Ainsi on obtient un blocage en rotation par coopération de formes, lesdites pattes 366A et 366B étant inclinées en direction du plateau 20.

Ainsi à l'aide du circlips 178 on peut bloquer les pattes 366A élastiquement déformables, tout comme les pattes 366B.

Il est donc possible de former un sous-ensemble comportant le plateau 20, le dispositif de frottement 174 et la rondelle d'étanchéité 152A.

Ensuite on procède à la fixation du disque 36 équipé de l'autre rondelle d'étanchéité 152B, le blocage de ladite rondelle s'effectuant par la fixation du disque 34. Bien entendu on peut intégrer le disque 36 au sous-ensemble 20-174,152A, la rondelle 152B étant alors mise en place entre le disque 34, fixé sur le plateau 20, et le disque 36, les rondelles 152A,152B ne pouvant s'échapper grâce à leurs pattes 366A,366B.

On notera que la périphérie externe du plateau 26 est évasée pour logement de la jupe 22 avec son disque 34, ainsi que pour montage du dispositif élastique 32.

L'épaisseur du plateau de réaction 26 est ainsi décroissante en allant radialement en direction opposée à l'axe de l'ensemble.

Par ailleurs la zone d'enracinement du manchon 264 au plateau 26 est formée à la faveur d'arrondis. On obtient ainsi une disposition très compacte axialement.

A la figure 7, c'est le disque 36 qui présente les deux épaulements 256A et 256B pour les deux rondelles d'étanchéité 252A,252B. Ces épaulements ont une configuration analogue à ceux de la figure 1 et présentent donc une surface de butée cylindrique d'orientation axiale se raccordant à une surface de portée conique, la surface de portée conique de l'épaulement 256A étant dirigée vers l'axe de l'ensemble en étant inclinée en direction du plateau 26, tandis que la surface de portée conique de l'épaulement 256B est dirigée radialement en direction opposée à l'axe de l'ensemble en étant inclinée axialement en direction du plateau 20. Les surfaces de portée coniques forment un angle obtu avec leurs surfaces cylindriques de centrage associées.

Les épaulements 256B,256A sont décalés axialement par rapport à leurs nervures 266A,266B associées.

Les fonds des épaulements 256A et 256B sont décalés radialement l'un par rapport à l'autre. Le plateau 20 présente une nervure annulaire d'appui 266A, tandis que le disque 34 présente une nervure annulaire d'appui 266B.

Ainsi la rondelle d'étanchéité 256B, par son bord externe, s'appuie sur la nervure 266B de la première masse tournante 12, tandis que par son bord interne, elle prend appui contre le fond de l'épaulement 256B de la seconde masse tournante 14.

La rondelle d'étanchéité 252A prend appui par son bord externe contre le fond de l'épaulement 256A du disque de la seconde masse tournante 14 et par son bord interne contre la nervure annulaire 266A de la première masse tournante 12.

Ainsi qu'on l'aura compris il est possible de former les deux rondelles d'étanchéité 252A,252B à partir d'une seule et même pièce par découpage. La rondelle 252A est formée à partir de la chute centrale de matière de la rondelle 252B, et c'est la raison pour laquelle les fonds des épaulements 256A et 256B sont décalés légèrement radialement l'un par rapport à l'autre.

Dans toutes les réalisations on tire parti de l'inclinaison du disque 36 entre ses pattes 42 et sa zone de fixation au plateau de réaction 26.

On notera que dans les figures 5 et 7 la zone inclinée du disque 36 se raccorde par un arrondi à la zone de fixation du disque 36 au plateau 26.

Ceci est nécessaire pour respectivement contourner le retour 131 et la nervure 266A, ledit arrondi étant implanté radialement au niveau dudit retour 131 et de ladite nervure 266A. Dans les figures 5 et 7 les rondelles d'étanchéité sont, après montage sensiblement parallèles comme à la figure 1.

## Revendications

1. Amortisseur de torsion, notamment pour véhicule automobile, comportant un premier (12) et un second (14) éléments coaxiaux qui définissent entre eux un logement annulaire étanche (30), qui reçoit, d'une part, un dispositif élastique d'amortissement (32) à action circonférentielle intervenant entre les deux éléments tournants (12,14), et d'autre part, un agent de lubrification de cedit dispositif élastique, dans lequel le logement annulaire (30) est délimité en majeure partie par au moins deux pièces (20,34) appartenant au premier des éléments tournants (12,14), tandis que le second élément tournant comporte un disque (36), qui pénètre dans ledit logement et dans lequel des moyens d'étanchéité (52A,52B-152A,152B-252A,252B) délimitent ledit logement annulaire (30) radialement vers l'intérieur, lesdits moyens (52A,52B) comportant deux rondelles d'étanchéité (52A,52B-152A,152B...) coaxiales disposées de part et d'autre du disque (36) du second élément tournant (14), dont chacune est en appui par l'une de ses faces (64A,64B) contre une surface de portée (66A,66B...) associée au disque (36) du second élément tournant, et par l'autre de ses faces (62A,62B) contre une surface de portée (60A,60B) associée au premier élément tournant, chaque rondelle d'étanchéité (52A,52B) étant montée comprimée axialement, de manière à présenter une forme de tronc de cône, caractérisé en ce que chaque rondelle d'étanchéité (52A,52B...) est montée comprimée axialement directement entre ses deux surfaces de portée, et est susceptible de prendre appui par l'un de ses bords circulaires (50A,54B...) contre un épaulement (56A,56B...) formé en vis-à-vis sur l'un des éléments premier élément tournant (12) - disque (36) du second élément tournant et par l'autre de ses bords sur une nervure annulaire (66A,66B...) formée en vis-à-vis sur l'autre des éléments premier élément tournant (12) - disque (36) du second élément tournant (14), et en ce que les deuxdites rondelles( 52A,52B) sont sensiblement parallèles.

2. Amortisseur de torsion selon la revendication 1, caractérisé en ce que les deux rondelles d'étanchéité (52A,52B) sont sensiblement identiques.

3. Amortisseur de torsion selon la revendication 1, caractérisé en ce que l'une des rondelles d'étanchéité (262A) est formée à partir de la chute centrale de matière de l'autre rondelle d'étanchéité (252B).

4. Amortisseur de torsion selon l'une quelconque des revendications 1 à 3, caractérisé en ce que chaque épaulement radial (56A,56B) comporte une surface de butée cylindrique, d'orientation axiale, (58A,58B) et une surface de portée (60A,60B) qui s'étend radialement et qui délimite entre elles un fond d'épaulement (56A,56B) contre lequel la rondelle associée (52A,52B) est admise à prendre appui par l'un de ses bords circulaires (54A,54B).

5. Amortisseur de torsion selon la revendication 4, caractérisé en ce que chaque épaulement (56A,56B) comporte une surface de portée conique (60A,60B) qui, en section transervale, forme un angle obtu avec la surface de butée cylindrique (58A,58B) d'orientation axiale.

6. Amortisseur de torsion selon l'une quelconque des revendications 1 à 5, caractérisé en ce que la nervure annulaire de portée (66A,66B) est décalée axialement par rapport à son épaulement (56A,56B) associé.

7. Amortisseur de torsion selon la revendication 5, caractérisé en ce que le disque (36) du second élément tournant (14) est incliné axialement entre ses deux nervures annulaires de portée (66A,66B).

8. Amortisseur de torsion selon l'une quelconque des revendications 1 à 7, caractérisé en ce qu'il consiste en un volant amortisseur de torsion pour véhicule automobile, dont le premier élément tournant comporte un plateau (20) destiné à être calé en rotation sur le moteur à combustion interne du véhicule automobile, tandis que son second élément tournant est destiné à être calé en rotation sur l'arbre d'entrée de la boîte de vitesses, et en ce que le plateau (20) du premier élément tournant (12) porte à sa périphérie externe une jupe (22) d'orientation axiale, à l'extrémité libre de laquelle est fixé, de manière étanche, un disque (34) s'étendant radialement vers l'intérieur, en sorte que le logement annulaire (30) est délimité en majeure partie par ledit plateau (20), la jupe (22) et le disque (34), tandis que le disque (36) du second élément tournant (14) est solidaire d'un plateau (26) formant le plateau de réaction d'un embrayage.

9. Amortisseur de torsion selon la revendication 9, dans lequel le plateau (20) du premier élément tournant (12) est solidaire d'un moyeu central (18) portant un premier dispositif de frottement (72), caractérisé en ce qu'un second dispositif de frottement (74) est interposé radialement entre le logement annulaire (30) et le premier dispositif de frottement (72), ledit second dispositif de frottement (74) agissant axialement entre le disque (36) du second élément tournant (14) et le plateau (20) du premier élément tournant (12).

## Patentansprüche

1. Torsionsdämpfer, insbesondere für Kraftfahrzeuge, umfassend ein erstes (12) und ein zweites (14) koaxiales Element, die eine zwischen ihnen liegende dichte ringförmige Aufnahme (30) bilden, die einerseits eine umfangsmäßig wirksame elastische Dämpfungsvorrichtung (32), die zwischen den beiden umlaufenden Elementen (12, 14) wirksam wird, und andererseits ein Schmiermittel für die besagte elastische Dämpfungsvorrichtung aufnimmt, wobei die ringförmige Aufnahme (30) zum größten Teil durch mindestens zwei Teile (20, 34) begrenzt wird, die zum ersten der umlaufenden Elemente (12, 14) gehören, während das zweite umlaufende Element eine Scheibe (36) umfaßt, die in die besagte Aufnahme eingreift, und wobei Dichtungsmittel (52A, 52B-152A, 152B-252A, 252B) die besagte ringförmige Aufnahme (30) radial nach innen begrenzen, wobei die besagten Dichtungsmittel (52A, 52B) zwei koaxiale Dichtungsscheiben (52A, 52B-152A, 152B ...) umfassen, die beiderseits der Scheibe (36) des zweiten umlaufenden Elements (14) angeordnet sind und die jeweils mit einer ihrer Seiten (64A, 64B) an einer Auflagefläche (66A, 66B ...), die zu der Scheibe (36) des zweiten umlaufenden Elements gehört, und mit der anderen ihrer Seiten (62A, 62B) an einer Auflagefläche (60A, 60B), die zum ersten umlaufenden Element gehört, zur Anlage kommen, wobei jede Dichtungsscheibe (52A, 52B) axial zusammengedrückt eingebaut ist, so daß sie eine Kegelstumpfform aufweist , **dadurch gekennzeichnet**, daß jede Dichtungsscheibe (52A, 52B ...) axial zusammengedrückt direkt zwischen ihren beiden Auflageflächen gelagert ist und mit einer ihrer kreisförmigen Kanten (50A, 54B ...) an einer Schulter (56A, 56B ...), die gegenüberliegend auf einem der Elemente erstes umlaufendes Element (12) oder Scheibe (36) des zweiten umlaufenden Elements ausgebildet ist, und mit der anderen ihrer Kanten an einer ringförmigen Auflagerippe (66A, 66B ...) zur Anlage kommen kann, die gegenüberliegend auf dem anderen der Elemente erstes umlaufendes Element (12) oder Scheibe (36) des zweiten umlaufenden Elements (14) ausgebildet ist, und daß die beiden besagten Dichtungsscheiben (52A, 52B) in etwa parallel verlaufen.

2. Torsionsdämpfer nach Anspruch 1 , **dadurch gekennzeichnet**, daß die beiden Dichtungsscheiben (52A, 52B) in etwa identisch ausgeführt sind.

3. Torsionsdämpfer nach Anspruch 1 , **dadurch gekennzeichnet**, daß eine der Dichtungsscheiben (262A) aus dem mittleren Materialverschnitt der anderen Dichtungsscheibe (252B) gebildet ist.

4. Torsionsdämpfer nach einem der Ansprüche 1 bis 3, **dadurch gekennzeichnet**, daß jede radiale Schulter (56A, 56B) eine axial ausgerichtete zylindrische Anschlagfläche (58A, 58B) und eine Auflagefläche (60A, 60B) umfaßt, die sich radial erstreckt und die einen zwischen ihnen liegenden Boden einer Schulter (56A, 56B) begrenzt, an der die zugehörige Dichtungsscheibe (52A, 52B) mit einer ihrer kreisförmigen Kanten (54A, 54B) zur Anlage kommen kann.

5. Torsionsdämpfer nach Anspruch 4 , **dadurch gekennzeichnet**, daß jede Schulter (56A, 56B) eine konische Auflagefläche (60A, 60B) umfaßt, die im Querschnitt einen stumpfen Winkel mit der axial ausgerichteten zylindrischen Anschlagfläche (58A, 58B) bildet.

6. Torsionsdämpfer nach einem der Ansprüche 1 bis 5, **dadurch gekennzeichnet**, daß die ringförmige Auflagerippe (66A, 66B) im Verhältnis zu ihrer zugehörigen Schulter (56A, 56B) axial versetzt ist.

7. Torsionsdämpfer nach Anspruch 5 , **dadurch gekennzeichnet**, daß die Scheibe (36) des zweiten umlaufenden Elements (14) zwischen ihren beiden ringförmigen Auflagerippen (66A, 66B) axial geneigt ist.

8. Torsionsdämpfer nach einem der Ansprüche 1 bis 7, **dadurch gekennzeichnet**, daß er aus einem Torsionsdämpfungsschwungrad für Kraftfahrzeuge besteht, dessen erstes umlaufendes Element eine Platte (20) trägt, die für die drehfeste Verbindung mit dem Verbrennungsmotor des Kraftfahrzeugs bestimmt ist, während sein zweites umlaufendes Element für die drehfeste Verbindung mit der Eingangswelle des Getriebes bestimmt ist, und daß die Platte (20) des ersten umlaufenden Elements (12) an ihrem äußeren Umfang eine axial ausgerichtete Einfassung (22) trägt, an deren freiem Ende dicht eine Scheibe (34) befestigt ist, die sich radial nach innen erstreckt, so daß die ringförmige Aufnahme (30) zum größten Teil durch die besagte Platte (20), die Einfassung (22) und die Scheibe (34) begrenzt wird, während die Scheibe (36) des zweiten umlaufenden Elements (14) fest mit einer Platte (26) verbunden ist, die die Gegenanpreßplatte einer Kupplung bildet.

9. Torsionsdämpfer nach Anspruch 8, bei dem die Platte (20) des ersten umlaufenden Elements (12) fest mit einer mittigen Nabe (18) verbunden ist, die eine erste Reibungsvorrichtung (72) trägt , **dadurch gekennzeichnet**, daß eine zweite Reibungsvorrichtung (74) radial zwischen der ringförmigen Aufnahme (30) und der ersten Reibungsvorrichtung (72) eingefügt ist, wobei die besagte zweite Reibungsvorrichtung (74) axial zwischen der Scheibe (36) des zweiten umlaufenden Elements (14) und der Platte (20) des ersten umlaufenden Elements (12) wirksam ist.

## Claims

1. A torsion damper, especially for a motor vehicle, comprising a first element (12) and a second element (14) coaxial with each other and defining between them a sealed annular housing (30), which receives, firstly, a circumferentially acting resilient damping means (32) interposed between the two rotating elements (12, 14), and secondly, a lubricating agent for this said resilient member, wherein the greater part of the annular housing (30) is defined by at least two components (20, 34) of the first of the rotating elements (12, 14), while the second rotating element comprises a disc (36) which penetrates into the said housing, and wherein sealing member (52A, 52B-152A, 152B-252A, 252B) delimit the said annular housing (30) radially inwardly, the said means (52A, 52B) comprising two coaxial sealing rings (52A, 52B-152A, 152B ...), disposed on either side of the disc (36) of the second rotating element (14), and each of which is in engagement through one of its surfaces (64A, 64B) against a support surface (66A, 66B ...) associated with the disc (36) of the second rotating element, and through its other surface (62A, 62B) against a support surface (60A, 60B) associated with the first rotating element, each sealing ring (52A, 52B) being mounted in axial compression in such a way as to have the form of a frustum of a cone, characterised in that each sealing ring (52A, 52B) is mounted in axial compression directly between its two support surfaces, and is arranged to bear, through one of its circular edges (50A, 54B ...), against a shoulder (56A, 56B ...) formed in facing relationship on one of the elements comprising the first rotating element (12) and the disc (36) of the second rotating element, and through its other edge on an annular ridge (66A, 66B ...) formed in facing relationship on the other one of the elements comprising the first rotating element (12) and the disc (36) of the second rotating element (14), and in that the two said rings (52A, 52B) are substantially parallel.

2. A torsion damper according to Claim 1, characterised in that the two sealing rings (52A, 52B) are substantially identical.

3. A torsion damper according to Claim 1, characterised in that one of the sealing rings (262A) is formed from the unwanted excess material from the centre of the other sealing ring (252B).

4. A torsion damper according to any one of Claims 1 to 3, characterised in that each radial shoulder (56A, 56B) comprises an axially oriented cylindrical abutment surface (58A, 58B) and a support surface (60A, 60B) which extends radially and which defines between the said surfaces a shoulder base (56A, 56B) against which the associated ring (52A, 52B) is caused to bear through one of its circular edges (54A, 54B).

5. A torsion damper according to Claim 4, characterised in that each shoulder (56A, 56B) has a conical support surface (60A, 60B) which, in transverse cross section, defines an obtuse angle with the axially oriented cylindrical engagement surface (58A, 58B).

6. A torsion damper according to any one of Claims 1 to 5, characterised in that the annular support ridge (66A, 66B) is offset axially with respect to its associated shoulder (56A, 56B).

7. A torsion damper according to Claim 5, characterised in that the disc (36) of the second rotating element (14) is inclined axially between its two annular support ridges (66A, 66B).

8. A torsion damper according to any one of Claims 1 to 7, characterised in that it consists of a torsion damped flywheel for a motor vehicle, the first rotating element of which comprises a plate (20) adapted to be mounted on the internal combustion engine of the motor vehicle for rotation thereby, while its second rotating element is adapted to be mounted on the input shaft of the gearbox for rotation therewith, and in that the plate (20) of the first rotating element (12) carries at its outer periphery an axially oriented skirt portion (22), to the free end of which there is sealingly fixed a disc (34) which extends radially inwards, in such a way that the annular housing (30) is mostly delimited by the said plate (20), the skirt portion (22) and the disc (34), while the disc (36) of the second rotating element (14) is fixed to a plate (26) that constitutes the reaction plate of a clutch.

9. A torsion damper according to Claim 9, in which the plate (20) of the first rotating element (12) is fixed to a central hub (18) that carries a first friction device (72), characterised in that a second friction device (74) is interposed radially between the annular housing (30) and the first friction device (72), with the said second friction device (74) working axially between the disc (36) of the second rotating element (14) and the plate (20) of the first rotating element (12).
